# EUROPÄISCHE PATENTSCHRIFT

(11) **EP 0 667 986 B1**
(45) Veröffentlichungstag und Bekanntmachung des Hinweises auf die Patenterteilung: **05.03.1997**
(21) Anmeldenummer: 94900003.8
(22) Anmeldetag: 04.11.1993
(51) Int. Cl.: H02H 7/122

(54) **VORRICHTUNG ZUM SCHUTZ EINES WECHSELRICHTERS**
DEVICE FOR PROTECTING AN INVERTER
DISPOSITIF PERMETTANT DE PROTEGER UN ONDULEUR

(30) Priorität: 04.11.1992 AT 2175/92
(43) Veröffentlichungstag der Anmeldung: 23.08.1995
(73) Patentinhaber: ELIN ENERGIEANWENDUNG GESELLSCHAFT M.B.H., A-1141 Wien (AT)
(72) Erfinder: JERABEK, Günther, A-1200 Wien (AT); SCHAMBÖCK, Hans, A-2120 Obersdorf (AT); TRENNER, Andreas, A-1040 Wien (AT); LEHOTZKY, Peter, A-2351 Wr. Neudorf (AT)
(74) Vertreter: Krause, Peter
(86) Internationale Anmeldenummer: AT9300170
(87) Internationale Veröffentlichungsnummer: WO9410733

(56) Entgegenhaltungen:
- AT-B- 329 659
- DE-A- 4 115 856

## Beschreibung

Die Erfindung betrifft eine Anordnung bei einem Wechselrichter, vorzugsweise Pulswechselrichter, der eingangsseitig an einer Gleichspannung angeschlossen ist und einen Wechselstrommotor, insbesondere Asynchronmotor, speist, wobei die Anordnung zwischen einer Netzdrossel und einem Parallelkondensator am Eingang des Wechselrichters eingeschleift ist. Eine solche Anordnung ist aus der AT-A-329 659 bekannt.

Bei Straßenbahnnetzen ist es üblich, diese in einzelne Versorgungsabschnitte zu unterteilen. Es kann somit vorkommen, daß eine Staßenbahngarnitur in einen kurzschlußbehafteten Streckenabschnitt einfährt, z.B. wird bei einem Unfall eines öffentlichen Verkehrsmittels der entsprechende Streckenabschnitt geerdet und es besteht die Möglichkeit, daß die nachfolgende Zugsgarnitur in den geerdeten Abschnitt einfährt. Im Bereich von Werkstätten und Wartungshallen werden zur Sicherheit oft einzelne Streckenabschnitte geerdet, wobei auch hier ein Einfahren in diesen Streckenabschnitt mit angelegtem Bügel nicht ausgeschlossen werden kann.
Ohne geeignete Maßnahmen würde in diesem Fehlerfall ein unzulässig hoher Rückspeisestrom (I_{R}) fließen, der zur Zerstörung der Halbleiterventile des Wechselrichters führen würde.
Zur Beherrschung dieses Fehlers sind eine Reihe von Maßnahmen denkbar.
Eine wäre, einen mechanischen Schnellschalter am Eingang des Wechselrichters vorzusehen, der bei einem Überstrom den Wechselrichter vom Netz trennt. Da mechanische Schalter relativ große Auslösezeiten besitzen, können die Halbleiter nicht ausreichend gut geschützt werden. Eine andere Maßnahme bestünde darin, in den Leitungen zum Wechselrichter flinke Sicherungen vorzusehen. Durch diese Sicherungen wird zwar der Kurzschlußstrom begrenzt und der Wechselrichter vom fehlerbehafteten Netz getrennt, aber die Zugsgarnitur ist nach Behebung des Kurzschlusses aufgrund der defekten Sicherungen nicht mehr fahrbereit. Um eine Weiterfahrt zu ermöglichen, müssen die Sicherungen erst mühevoll ausgewechselt werden.

Die Aufgabe besteht nun darin, eine Anordnung zu schaffen, mit der Erd- bzw. Kurzschlüsse im speisenden Netz optimal beherrscht werden.

Diese Aufgabenstellung wird durch die Erfindung gelöst, welche dadurch gekennzeichnet ist, daß die Anordnung aus einer Freilaufdiode in Sperrichtung, welche an der Gleichspannung liegt, und einer Antiparallelschaltung aus einem Halbleiterschalter, insbesondere abschaltbarem Thyristor (GTO), und einer Diode, welche in die positive Gleichspannungsleitung geschaltet ist, wobei die Kathode der Freilaufdiode einerseits mit der Anode der Diode und andererseits mit dem Emitter bzw. der Kathode des Halbleiterschalters verbunden ist, besteht, und daß ein Strom- und ein Spannungsmeßorgan vorgesehen ist, welche einen Eingangskurzschluß erkennen, bei dem der Halbleiterschalter gesperrt wird.
Dadurch wird sichergestellt, daß keine zu hohen Ströme in den Halbleitern des Wechselrichters auftreten.
Im Fehlerfall wird der Halbleiterschalter gesperrt und die Freilaufdiode übernimmt den Netzstrom.
Die Diode der Antiparallelschaltung ist so angeordnet, daß bei Leistungsentnahme aus dem Gleichspannungsnetz diese Diode leitet. Hingegen fließt über den Halbleiterschalter nur dann Strom, wenn Energie ins Netz zurückgespeist wird.

Wird bei einem Netzkurzschluß der Wechselrichter nicht rasch vom Netz getrennt, so entlädt sich der Parallelbzw. Stützkondensator. Dies wirkt sich für den Wechselstrommotor wie ein Klemmenkurzschluß aus.

Von Vorteil ist, daß eine Ansteuerung für den Halbleiterschalter vorgesehen ist, die bei einem irregulären Spannungseinbruch und/oder einem Anstieg des Rückspeisestromes auf unzulässig hohe Werte den Halbleiterschalter sperrt.

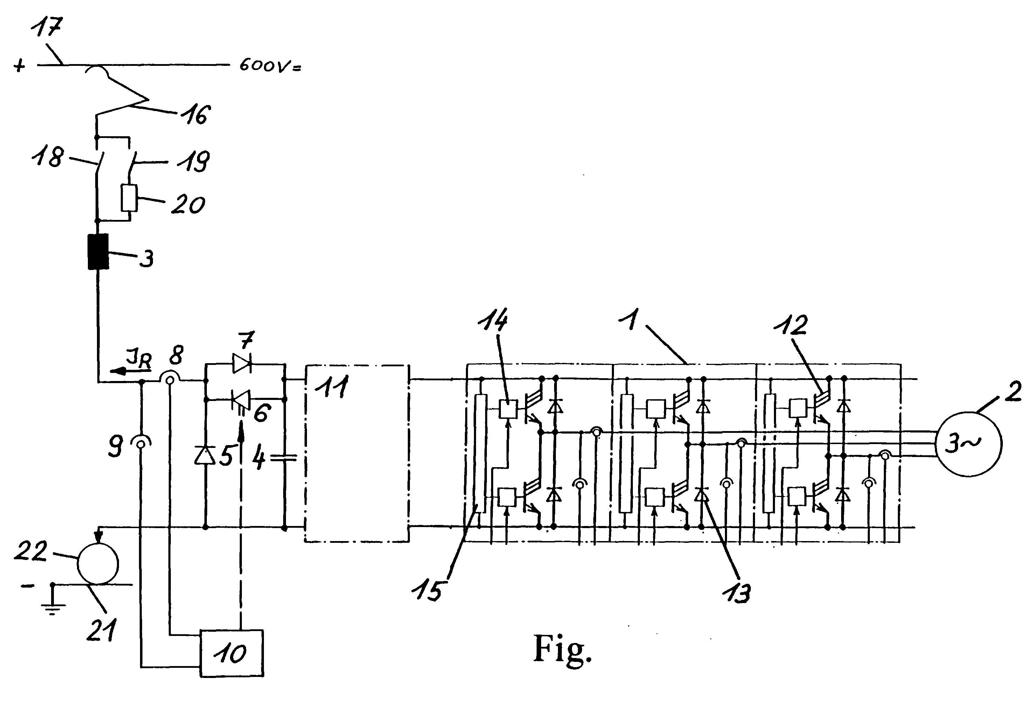

Die Erfindung wird nun an Hand der Zeichnung nun noch näher erläutert.

Die Zeichnung zeigt einen dreiphasigen Wechselrichter 1 mit vorgeschaltetem Bremssteller 11. Am Eingang des Bremsstellers 11 ist ein Parallelkondensator 4 bzw. Stützkondensator vorgesehen.
Der Wechselrichter 1, welcher den Asynchronmotor 2 speist, besteht aus sechs Transistoren 12, denen je eine Freilaufdiode 13 parallel zugeordnet ist. Jeder Transistor 12 ist mit einer Ansteuerung 14 verbunden, wobei die beiden Ansteuerungen 14 für die Transistoren 12 einer Phase an eine Überwachungselektronik 15 angeschlossen sind. Die Ströme und Spannungen in den Zuleitungen zum Asynchronmotor 2 werden erfaßt und einer nicht dargestellten Steuerung zugeführt, welche auch mit den Ansteuerungen 14 verbunden ist.

Die erfindungsgemäße Anordnung ist zwischen einer Netzdrossel 3 und einem Parallelkondensator 4 geschaltet. Diese besteht aus einer Freilaufdiode 5 in Sperrichtung, welche an der Gleichspannung liegt. Eine Antiparallelschaltung aus einem Halbleiterschalter 6, in diesem Fall einem abschaltbaren Thyristor (GTO), und einer Diode 7 ist in die positive Gleichspannungsleitung geschaltet. Die Kathode der Freilaufdiode 5 ist mit der Anode der Diode 7 und mit der Kathode des abschaltbaren Thyristors 6 verbunden. Weiters sind ein Strom- 8 und ein Spannungsmeßorgan 9 vorgesehen, welche einen Eingangskurzschluß erkennen, bei dem der abschaltbare Thyristor 6 gesperrt wird.

Für den abschaltbaren Thyristor 6 ist eine Ansteuerung 10 vorgesehen, an welche das Strom- 8 und das Spannungsmeßorgan 9 angeschlossen ist, und die bei einem irregulären Spannungseinbruch und/oder einem Anstieg des Rückspeisestromes I_{R} auf unzulässig hohe Werte den Thyristor 6 sperrt. Der Rückspeisestrom I_{R} fließt immer in der gezeichneten Richtung.

Bei der in der Fig. gezeigten Darstellung handelt es sich um einen Antrieb für ein Schienenfahrzeug, z.B. eine Straßenbahn. Die Netzdrossel 3 ist hier mit einem Anschluß über einen Stromabnehmer 16 und einem Schalter 18 mit der Oberleitung 17, die der positive Pol der Versorgungsgleichspannung ist, verbunden. Parallel zu Schalter 18 ist ein zweiter Schalter 19 mit einem Ladewiderstand 20 in Serie geschaltet.
Der negative Pol der Gleichspannung ist die Schiene 21 der Straßenbahn, welche Erdpotential aufweist, wobei die Verbindung mit dem Bremssteller 11 und dem Wechselrichter 1 über die Räder 22 des Schienenfahrzeuges hergestellt ist.

Bei einem Netzkurzschluß, welcher eine Verbindung zwischen der Oberleitung 17 und der Schiene 21 darstellt, würde ein unzulässig hoher Rückspeisestrom I_{R} bzw. Kurzschlußstrom in der gezeichneten Richtung auftreten. Durch das Strom- 8 und das Spannungsmeßorgan 9 wird dieser Kurzschluß früh erkannt und der Thyristor 6 wird von der Ansteuerung 10 unverzüglich gesperrt, u.zw. bevor der Rückspeisestrom I_{R} unzulässig hoch ansteigt und sich ein Kurzschluß des Asynchronmotors 2 über den Wechselrichter 1 einstellt. Der dabei in der Netzdrossel 3 eingeprägte Abschaltstrom geht auf die Freilaufdiode 5 über und nimmt infolge der ohmschen Kreiswiderstände kontinuierlich ab.

Die Halbleiterdioden des Bremsstellers 11 werden ebenfalls durch die erfindungsgemäße Anordnung bei einem Kurzschluß nicht mit unzulässig hohen Strömen belastet.

Im Normalbetrieb des Antriebes ist der abschaltbare Thyristor 6 immer leitend.

## Patentansprüche

1. Anordnung bei einem Wechselrichter (1), vorzugsweise Pulswechselrichter, der eingangsseitig an einer Gleichspannung angeschlossen ist und einen Wechselstrommotor (2), insbesondere Asynchronmotor, speist wobei die Anordnung zwischen einer Netzdrossel (3) und einem Parallelkondensator (4) am Eingang des Wechselrichters (1) eingeschleift ist, **dadurch gekennzeichnet**, daß die Anordnung aus einer Freilaufdiode (5) in Sperrichtung, welche an der Gleichspannung liegt, und einer Antiparallelschaltung aus einem Halbleiterschalter (6), insbesondere abschaltbarem Thyristor (GTO), und einer Diode (7), welche in die positive Gleichspannungsleitung geschaltet ist, wobei die Kathode der Freilaufdiode (5) einerseits mit der Anode der Diode (7) und andererseits mit dem Emitter bzw. der Kathode des Halbleiterschalters (6) verbunden ist, besteht, und daß ein Strom- (8) und ein Spannungsmeßorgan (9) vorgesehen ist, welche einen Eingangskurzschluß erkennen, bei dem der Halbleiterschalter (6) gesperrt wird.

2. Anordnung nach Anspruch 1, **dadurch gekennzeichnet**, daß eine Ansteuerung (10) für den Halbleiterschalter (6) vorgesehen ist, die bei einem irregulären Spannungseinbruch und/oder einem Anstieg des Rückspeisestromes (I_{R}) auf unzulässig hohe Werte den Halbleiterschalter (6) sperrt.

## Claims

1. An arrangement in an inverter (1), preferably a pulse-width-modulated inverter, which is connected at its input end to a d.c. voltage and supplies an a.c. motor (2), in particular an asynchronous motor, wherein the arrangement is looped-in between a line reactor (3) and a parallel capacitor (4) at the input of the inverter (1),
characterised in that the arrangement consists of a freewheeling diode (5) in the blocking direction which is connected to the d.c. voltage, and an antiparallel circuit comprising a semiconductor switch (6), in particular a gate turn-off thyristor (GTO), and a diode (7) which is connected into the positive d.c. voltage line, wherein the cathode of the freewheeling diode (5) is connected on the one hand to the anode of the diode (7) and on the other hand to the emitter and cathode of the semiconductor switch (6), and that a current measuring element (8) and a voltage measuring element (9) are provided, which latter detect an input short-circuit in the case of which the semiconductor switch (6) is blocked.

2. An arrangement as claimed in Claim 1, characterised in that a drive means (10) is provided for the semiconductor switch (6), which drive means blocks the semiconductor switch (6) in the event of an irregular voltage break and/or an increase in the feedback current (I_{R}) to impermissibly high values.

## Revendications

1. Dispositif prévu pour un onduleur (1), de préférence un onduleur à impulsions, raccordé côté entrée à une tension continue et alimentant un moteur à courant alternatif, en particulier un moteur asynchrone, le dispositif étant branché en boucle entre une bobine d'arrêt (3) et un condensateur parallèle (4), à l'entrée de l'onduleur (1), caractérisé en ce que le dispositif est constitué d'une diode de roue libre (5) dans la direction de blocage, placée sous l'effet de la tension continue, et d'un branchement antiparallèle constitué d'un commutateur à semi-conducteur (6), en particulier d'un thyristor déconnectable (GTO) et d'une diode (7), branchée dans la ligne positive de la tension continue, la cathode de la diode à roue libre (5) étant reliée, d'une part, à l'anode de la diode (7) et, d'autre part, à l'émetteur, respectivement à la cathode du commutateur à semi-conducteur (8), et en ce qu'un organe de mesure d'intensité (8) et un organe de mesure de tension (9) sont prévus, qui identifient un court-circuit à l'entrée, pour lequel le commutateur à semi-conducteur (6) est bloqué.

2. Dispositif selon la revendication 1, caractérisé en ce qu'est prévue pour le commutateur à semi-conducteur (6), une commande (10) qui, en cas d'apparition d'irrégularités de tension et/ou d'une augmentation du courant d'alimentation de retour (I_{R}) ayant des valeurs inadmissibles, bloque le commutateur à semi-conducteur (6).
